# EUROPÄISCHE PATENTSCHRIFT

(11) **EP 3 983 236 B1**
(45) Veröffentlichungstag und Bekanntmachung des Hinweises auf die Patenterteilung: **28.06.2023**
(21) Anmeldenummer: 20726357.5
(22) Anmeldetag: 13.05.2020
(51) Int. Cl.: B41F 21/00, B65H 1/26, B65H 3/32, B65H 3/60, B25J 9/00

(54) **SUBSTRATHANDHABUNGSSYSTEM MIT ROBOTERZELLE UND VERFAHREN ZU DESSEM BETREIBEN**
SUBSTRATE HANDLING SYSTEM HAVING A ROBOT CELL AND METHOD OF OPERATING
SYSTÈME DE MANIPULATION DE SUBSTRAT AVEC CELLULE ROBOTIQUE ET PROCÉDÉ DE FONCTIONNEMENT

(30) Priorität: 14.06.2019 DE 102019116301
(43) Veröffentlichungstag der Anmeldung: 20.04.2022
(73) Patentinhaber: Koenig & Bauer AG, 97080 Würzburg (DE)
(72) Erfinder: SCHUBERT, Julian, 97842 Karbach (DE)
(74) Vertreter: Koenig & Bauer AG
(86) Internationale Anmeldenummer: PCT/EP2020/063313
(87) Internationale Veröffentlichungsnummer: WO 2020/249350

(56) Entgegenhaltungen:
- EP-A1- 1 585 057
- WO-A1-2012/069056
- WO-A1-2015/147725
- WO-A1-2016/148618
- DE-A1- 2 723 162
- DE-A1- 3 718 601
- DE-A1- 10 122 430
- DE-A1- 10 151 917
- DE-A1-102010 017 593

## Beschreibung

Die Erfindung betrifft ein Substrathandhabungssystem mit einem Zufuhrsystem zur Zufuhr gestapelter Substrate und mit einer Verarbeitungsmaschine zum Verarbeiten gestapelter Substrate und ein Verfahren zum Betreiben eines Substrathandhabungssystems mit einem Zufuhrsystem zur Zufuhr gestapelter Substrate und einer Verarbeitungsmaschine zum Verarbeiten gestapelter Substrate.

Aus der JP 60 - 48848 A ist es bekannt, Teilstapel eines Bogenstapels mittels Greifern unterschiedlich zu Handhaben.

Aus der JP 62 - 8936 A bzw. der JP 62 - 8937 A ist es bekannt, Teilstapel mittels Greifern zu Handhaben.

Aus der DE 39 37 995 A1 ist es bekannt, zur Riesabtrennung bewegbare Gabeln einzusetzen.

Aus der EP 1 598 293 A1 ist ein Verfahren zum Beschicken eines Rütteltisches sowie eine Vorrichtung zur Durchführung des Verfahrens bekannt, wobei Teilstapel eines Gesamtstapels mittels Greifmitteln zum Rütteltisch gefördert werden.

Aus der EP 2 128 056 A1 ist ein Verfahren und eine Vorrichtung zum Handhaben eines Stapels von Blättern oder eines Teilstapels davon bekannt, wobei zunächst die Lage und Höhe des Stapels erfasst wird, wonach der Stapel oder Teilstapel unter Verwendung der zuvor erfassten Lage- und Höhendaten abschnittsweise angehoben und von der Seite her gegriffen und dann gehandhabt wird.

Aus der EP 2 923 977 B1 bzw. der EP 2 923 978 B1 ist es bekannt, zum Abtrennen eines Teilstapels von einem Gesamtstapel und zum Überführen dieses Teilstapels zu einem Rütteltisch eine manuell mittels eines Stick-Bedienelementes zu bedienende Greifeinrichtung einzusetzen.

Aus der WO 2012/069056 A1 ist eine automatische Handhabung und Belüftung eines Papierstapels bekannt, wobei ein Greifersysteme aufweisender Zwei-Arm-Roboter eingesetzt wird.

Aus der WO 2015/147724 A1 ist ein Greifer bekannt, der für eine Handhabung flexibler Substrate an einem Arm eines Roboters angebracht werden kann und dessen unterer Finger zum Einfahren in einen Gesamtstapel zum Trennen des Gesamtstapels in Teilstapel vorgesehen ist.

Aus der WO 2016/148618 A1 und bereits der SE 1450359 A1 ist ein Verfahren zum Greifen eines oberen Bündels flexibler Substrate mittels Greifern an einem zweiarmigen Roboter bekannt, wobei Sensoren zum Abtasten des Substratstapels eingesetzt werden und wobei ein zweiter unterer Greiferfinger neben einem ersten unteren Greiferfinger eingesetzt wird und anschließend der zweite untere Greiferfinger entlang der Stapelkante in seine endgültige Griffposition verlagert wird.

Aus der WO 2015/147725 A1 ist ein Verfahren zum Handhaben von Stapeln flexibler Substrate bekannt, wobei die erfassten Teilstapel von Greifern eines Zwei-Arm-Roboters erst in eine vertikale Lage gebracht und dann abgelegt werden.

Die DE 37 18 601 A1 zeigt eine Vorrichtung zum Abheben mindestens eines Material-Stapels.

Die DE 101 22 430 A1 zeigt eine Pufferstation in Logistik für Druckereien.

Die DE 101 51 917 A1 zeigt eine Anordnung und ein Verfahren zur kontinuierlichen Bereitstellung von Einzelbogen.

Der Erfindung liegt die Aufgabe zugrunde, ein alternatives Substrathandhabungssystem bzw. ein alternatives Verfahren zum Betreiben eines Substrathandhabungssystems zu schaffen. Insbesondere soll ein teil- oder vollautomatisches System geschaffen werden, welches auf die vielfältigen Anforderungen anpassbar bzw. angepasst ist.

Erfindungsgemäß wird die Aufgabe durch eine Vorrichtung mit den Merkmalen des unabhängigen Vorrichtungsanspruches und ein Verfahren mit den Merkmalen des unabhängigen Verfahrensanspruches gelöst. Vorteilhafte Ausgestaltungen ergeben sich aus den Unteransprüchen, der Beschreibung und den Zeichnungen.

Die Erfindung hat den Vorteil, dass ein alternatives Substrathandhabungssystem bzw. ein alternatives Verfahren zum Betreiben eines Substrathandhabungssystems geschaffen wird. Insbesondere wird ein teil- oder vollautomatisches System geschaffen, welches auf die vielfältigen Anforderungen anpassbar bzw. angepasst ist.

Im Folgenden soll die Erfindung beispielhaft erläutert werden. Die dazugehörigen Zeichnungen stellen dabei schematisch dar:
- Fig. 1:: Draufsicht auf ein Substrathandhabungssystem mit Zufuhrsystem, Roboterzelle und Verarbeitungsmaschine;
- Fig. 2:: Seitliche Ansicht des Substrathandhabungssystems mit Verarbeitungsmaschine und Roboterzelle;
- Fig. 3:: Rütteltisch mit nachgeordnetem Non-Stop-Anleger;
- Fig. 4:: System zur automatischen Vorbereitung von Banknotenbogen;
- Fig. 5:: Zufuhrsystem mit Logistiksystem zum Transport von Substratstapel enthaltenden Containern;
- Fig. 6:: Einem Substrathandhabungssystem zuführbare Substratstapel;
- Fig. 7:: Vom Substrathandhabungssystem bearbeiteter Substratstapel und gesammelte Stapelhilfen;
- Fig. 8:: Vakuum-Zählscheibe zum Zählen von Substratbogen;
- Fig. 9:: Zwei-Arm-Roboter mit Wechselgreifer;
- Fig. 10:: Draufsicht auf eine Roboterzelle mit an einem Rahmen angeordneter Vakuum-Zählscheibe;
- Fig. 11:: An Rahmen angeordnete Vakuum-Zählscheibe;
- Fig. 12:: Perspektivische Ansichten einer Vakuum-Zählscheibe;
- Fig. 13:: Handhabungsschritte von Substratbogen durch Greifersysteme eines Zwei-Arm-Roboters.

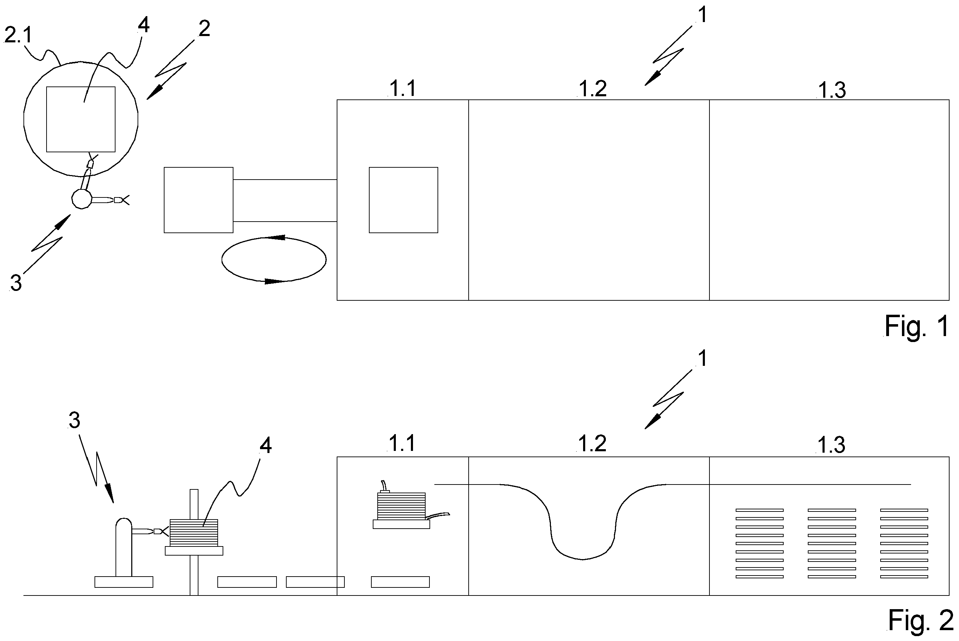

Die Fig. 1 bzw. Fig. 2 zeigen beispielsweise ein Substrathandhabungssystem mit einer beliebigen Verarbeitungsmaschine 1 und Roboterzelle 3. Als Verarbeitungsmaschine 1 kann beispielsweise eine bogenverarbeitende Maschine, insbesondere eine Bogendruckmaschine, vorgesehen sein. Die Verarbeitungsmaschine 1 kann auch eine Bogenoffsetrotationsdruckmaschine beispielsweise in Aggregat- und Reihenbauweise sein. Die Verarbeitungsmaschine 1 kann beispielsweise eine Druckmaschine sein, welche zugeführtes Substrat, insbesondere bogenförmiges bzw. tafelförmiges Substrat, beispielsweise Bedruckstoffbogen, verarbeitet, beispielsweise bedruckt und/oder lackiert bzw. nummeriert, schneidet und/oder inspiziert. Bevorzugt wird das Substrathandhabungssystem zur Verarbeitung von Wert- bzw. Banknotenmaterial eingesetzt.

Die Verarbeitungsmaschine 1 weist beispielsweise einen Anleger 1.1 auf, welchem bogenförmiges Substrat zuführbar ist. Dem Anleger 1.1 kann sich in Substratförderrichtung beispielsweise eine Anlage, ein oder mehrere Verarbeitungswerke wie Druckwerke 1.2 und eine Auslage 1.3 anschließen. Die Verarbeitungsmaschine 1 enthält bevorzugt ein nicht weiter dargestelltes Fördersystem, welches die zu verarbeitenden, beispielsweise zu bedruckenden bzw. zu lackierenden bzw. zu bearbeitenden usw. Substrate durch die Verarbeitungsmaschine 1 fördert. Das Fördersystem kann beispielsweise Förderbänder und/oder rotierende Bogenführungszylinder aufweisen, welche das Substrat mittels Greifern an der Vorderkante fixieren und im Greiferschluss übergeben. Die Maschine, insbesondere Druckmaschine, kann auch eine Wendeeinrichtung zum Wenden der Substrate aufweisen.

In der Auslage 1.3 kann als Fördersystem beispielsweise ein Kettenfördersystem mit zwei jeweils seitlich am Gestell der Auslage 1.3 geführten Auslageketten ausgebildet sein, zwischen denen Greiferwagen angeordnet sind, welche das Substrat zu einem Auslagestapel fördern. Die Greiferwagen können dafür Bogenfixiersysteme aufweisen, mit denen die zu fördernden Substrate an der Vorderkante gegriffen werden können. Von den Auslageketten können die Greiferwagen auf einer Greiferwagenbahn in Förderrichtung bis über den Auslagestapel geführt werden, wo die Greiferwagen die Substrate zur Ablage freigeben. In der Auslage 1.3 kann ein oder können auch mehrere Bogenstapel gebildet werden.

Das Substrathandhabungssystem weist neben der Verarbeitungsmaschine 1 zum Verarbeiten gestapelter Substrate ein Zufuhrsystem 2 zur Zufuhr gestapelter Substrate zur Verarbeitung durch die Verarbeitungsmaschine 1 auf. Das Zufuhrsystem 2 weist zumindest einen Bereitstellungsplatz 2.1 zur Bereitstellung von mindestens einem von der Verarbeitungsmaschine 1 zu verarbeitenden Substratstapel 4 aus einzeln gestapelten Substraten auf. Der Bereitstellungsplatz 2.1 des Substrates liegt dabei derart im Bereich einer Roboterzelle 3, also einem Arbeitsbereich eines Industrieroboters, dass dieser das bereitgestellte Substrat handhaben kann. Das Zufuhrsystem 2 stellt dabei bevorzugt gestapelte Substrate bereit, welche beispielsweise auf einer palettenförmigen Unterlage gestapelt zugeführt werden. Die vom Zufuhrsystem 2 bereitgestellten Substratstapel 4 können beispielsweise als Gesamtstapel oder auch als mittels Stapel- bzw. Trennhilfen getrennte Teilstapel zur Verfügung gestellt werden. Weiter können die zur Verfügung gestellten Substratstapel 4 auch verpackt bzw. versiegelt zur Verfügung gestellt werden. Die zur Verfügung gestellten Substratstapel 4 können beispielsweise in einem vorangehenden Druckdurchgang bedruckt worden sein.

Das Substrathandhabungssystem weist weiterhin zwischen dem Zufuhrsystem 2 und der Verarbeitungsmaschine 1 die Roboterzelle 3 auf, welche insbesondere einen Zwei-Arm-Roboter 3.1 umfasst. Bevorzugt weist der Zwei-Arm-Roboter 3.1 zwei unabhängig voneinander bewegbare Arme mit jeweils Greifsystemen 3.2 auf, welche bevorzugt über mehrere besonders bevorzugt mindestens über sechs Freiheitsgrade verfügen. Die Greifersysteme 3.2 des Zwei-Arm-Roboters 3.1 sind zur Handhabung jeweils einer Mehrzahl von Substraten ausgebildet. Beispielsweise können die Greifersysteme 3.2 jeweils mindestens zwei Greiferfinger umfassen, welche zum Greifen aufeinander zu bewegbar ausgebildet sein können. Die Greifersysteme 3.2 können weiterhin über pneumatische Anschlüsse, insbesondere Blasluftdüsen, verfügen. Einem oder beiden Greifersystemen 3.2 kann auch eine Trennhilfe zum Einfahren in den Substratstapel 4 zugeordnet sein.

Das Zufuhrsystem 2 wird insbesondere derart betrieben, dass mit diesem wahlweise verschiedenartig gestapelte Substrate zuführbar sind. Das heißt insbesondere, dass durch das Zufuhrsystem 2 gestapelte Substrate in den Wirkbereich der Roboterzelle 3, insbesondere in den Greifbereich des Zwei-Arm-Roboters 3.1, gebracht werden. Dabei können durch das Zufuhrsystem 2 insbesondere Substratstapel 4 aus ungetrennt gestapelten Substraten oder aus durch Stapelhilfen getrennte Substrate zuführt werden. Die aus ungetrennten Substraten bestehenden Substratstapel 4 bzw. die Substratstapel 4 aus durch Stapelhilfen getrennten Substraten werden bevorzugt durch das Zufuhrsystem 2 gefördert und auf einem definierten Bereitstellungsplatz 2.1 positioniert. Beispielsweise können Stapelbretter 6 bzw. Distanzbleche 7 als Stapelhilfen verwendet werden. Stapelbretter 6 können beispielsweise in einem vorangehenden Druckdurchgang zum Trennen einzelner Teilstapel in den weiterzuverarbeitenden Substratstapel 4 eingefügt werden.

In der Roboterzelle 3, insbesondere mittels des Zwei-Arm-Roboters 3.1, kann jeweils ein Teilstapel des auf dem Bereitstellungsplatz 2.1 positionierten Substratstapels 4 ergriffen werden und damit die ergriffenen Substrate des Teilstapels vom restlichen Stapel getrennt werden. Dabei kann in der Roboterzelle 3 ein Teilstapel eines beispielsweise durch Stapelbretter 6 gebildeten Teilstapels gegriffen bzw. gehandhabt werden. Bei geeigneter Abmessung kann aber auch ein gesamter durch Stapelhilfen gebildeter Teilstapel gegriffen bzw. gehandhabt werden. Bevorzugt werden im Zusammenhang mit dem Ergreifen bzw. Trennen eines Teilstapels die einzelnen Substrate des Teilstapels untereinander getrennt, beispielsweise gelockert.

In einem Substrathandhabungssystem ist weiterhin bevorzugt ein Ablagetisch vorgesehen, auf welchen die durch die Greifersysteme 3.2 gegriffenen Teilstapel ablegbar sind. Der Ablagetisch nimmt insbesondere durch Ablage eines oder mehrerer Teilstapel mittels der Greifersysteme 3.2 die anschließend von der Verarbeitungsmaschine 1 zu verarbeitenden Substrate auf. Vom Ablagetisch kann der aufgenommene Substratstapel 4 beispielsweise über Fördersysteme auf eine Palette 5, insbesondere eine Non-Stop-Systempalette 5, überführt werden. Insbesondere in der Ausbildung eines Non-Stop-Anlegers 1.1 können die auf einer Non-Stop-Systempalette 5 aufgenommenen Substratstapel 4 der Verarbeitungsmaschine 1 unterbrechungsfrei zugeführt werden. Bevorzugt erfolgt die Zufuhr der auf einer Palette 5 bzw. Non-Stop-Systempalette 5 gestapelten Bogen teil- oder vollautomatisiert, beispielsweise über ein Logistik- bzw. Transportsystem.

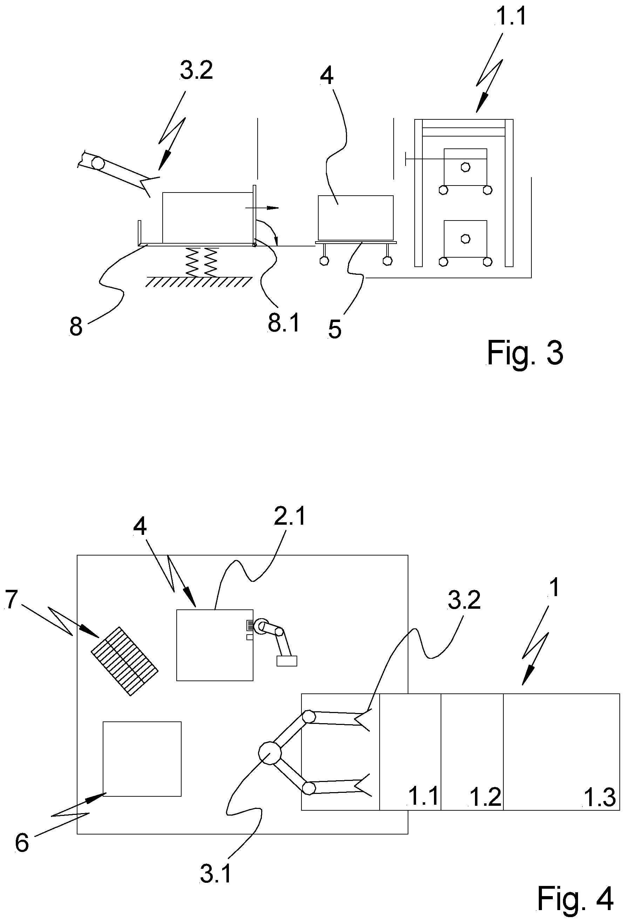

Die Fig. 3 zeigt einen bevorzugt als Rütteltisch 8 ausgeführten Ablagetisch mit einem verlagerbaren bzw. schwenkbaren Anschlag 8.1. Die von Greifersystemen 3.2 auf dem Rütteltisch 8 abgelegten Substratbogen können an dem Anschlag 8.1 insbesondere während einer Rüttelbewegung ausgerichtet werden. Nach Ausrichtung kann der Anschlag 8.1 verlagert bzw. verschwenkt werden und der fertig gerüttelte Teil- bzw. Substratstapel 4 der Verarbeitungsmaschine 1 zugeführt werden. Insbesondere kann der fertig gerüttelte Teil- bzw. Substratstapel 4 auf eine Non-Stop-Systempalette 5 überführt werden. Zur Überführung kann beispielsweise ein Logistik- bzw. Transportsystem zum Einsatz kommen, welches die Non-Stop-Systempalette 5 in den Bereich des Rütteltisches 8 verlagert. Es können Fördersysteme, Greifersysteme und/oder Schubsysteme zur Überführung des fertig gerüttelten Substratstapels 4 auf eine Palette 5 bzw. Non-Stop-Systempalette 5 vorgesehen sein. Der Ablagetisch, insbesondere Rütteltisch 8, kann aber auch mehrere unterschiedlichen Seiten zugeordnete Anschläge aufweisen, welche auch durch entsprechende Auswahl zum Ausrichten genutzt werden können. Der Rütteltisch 8 kann dabei in seiner Ablagefläche auf die ausgewählte Anschlagseite eingestellt werden. Beispielsweise kann eine Auswahl einer oder zweier Anschlagseiten aus zwei, drei oder auch vier Anschlagseiten erfolgen.

Der Anleger 1.1 der Verarbeitungsmaschine 1 ist vorzugsweise als Non-Stop-Anleger 1.1 ausgeführt, mittels welchem der Verarbeitungsmaschine 1 ununterbrochen Substratstapel 4 zur Verarbeitung zugeführt werden können. Ein solcher Non-Stop-Anleger 1.1 kann dafür einen Hilfsstapelträger mit Tragelementen aufweisen, welche einen Reststapel durch eine Non-Stop-Systempalette 5 hindurch untergreifen und zur weiteren Verarbeitung anheben. Während der Abarbeitung des Reststapels kann die leere Non-Stop-Systempalette 5 abgesenkt und ein neuer Substratstapel 4 eingesetzt werden. Dafür kann beispielsweise ein neuer insbesondere fertig gerüttelter Substratstapel 4 auf einer weiteren Non-Stop-Systempalette 5 unter dem Reststapel eingefahren und durch eine Stapeltragplatte angehoben werden. Damit kann durch den Non-Stop-Anleger 1.1 eine Stapelvereinigung unter Herausziehung der Tragelemente des Hilfsstapelträgers erfolgen. Der Verarbeitungsmaschine 1 können damit unterbrechungsfrei zu verarbeitende Substrate zugeführt werden.

Beim Betreiben des Substrathandhabungssystems erfolgt eine Zufuhr gestapelter Substrate mittels des Zufuhrsystems 2 zur Roboterzelle 3, welche die Substratstapel 4 zur Verarbeitung durch die Verarbeitungsmaschine 1 vorbereitet, welche die zugeführten Substrate insbesondere vollautomatisch weiter verarbeitet. Die zwischen dem Zufuhrsystem 2 und der Verarbeitungsmaschine 1 vorgesehene Roboterzelle 3 handhabt dabei mit Greifersystemen 3.2 jeweils eine Mehrzahl von Substraten, wobei durch das Zufuhrsystem 2 wahlweise verschiedenartig gestapelte Substrate zuführt werden. Es können dabei durch das Zufuhrsystem 2 Substratstapel 4 aus ungetrennt gestapelten Substraten oder aus durch Stapelhilfen getrennten Substraten zugeführt werden.

Das oder die Greifersysteme 3.2 der Roboterzelle 3, insbesondere des Zwei-Arm-Roboters 3.1, entfernen besonders bevorzugt Stapelhilfen aus zugeführten Substratstapeln 4. Dafür kann ein Ergreifen der Stapelhilfen mittels eines oder beider Greifersysteme 3.2 des Zwei-Arm-Roboters 3.1 erfolgen. Die Stapelhilfen können beispielsweise Stapelbretter 6 bzw. Distanzbleche 7 sein, welche insbesondere verschiedene Teilstapel des Substratstapels 4 zumindest bereichsweise voneinander mechanisch trennen. Mittels des oder der Greifersysteme 3.2 der Roboterzelle 3, insbesondere des Zwei-Arm-Roboters 3.1, werden die Stapelhilfen, insbesondere Stapelbretter 6 und/oder Distanzbleche 7, aus den die Stapelhilfen enthaltenden Substratstapeln 4 entfernt. Die Stapelhilfen werden entsprechend bevorzugt auf einem Sammelplatz und/oder in einem Sammelbehälter abgelegt.

Bevorzugt werden die Stapelhilfen wie Stapelbretter 6 und/oder Distanzbleche 7 aussortiert und/oder gesammelt. Zum Sammeln kann beispielsweise ein Sammelplatz und/oder ein Sammelbehälter vorgesehen sein, in welchem die Stapelhilfen, insbesondere Stapelbretter 6 bzw. Distanzbleche 7, von dem oder den Greifersystemen 3.2 der Roboterzelle 3 abgelegt werden. Die Stapelhilfen, insbesondere Stapelbretter 6 bzw. Distanzbleche 7, können beispielsweise mittels eines oder beiden Greifersystemen 3.2 des Zwei-Arm-Roboters 3.1 auf den Sammelplatz bzw. in den Sammelbehälter befördert werden. Es können auch mehrere beispielsweise für unterschiedliche Stapelhilfen vorgesehen Sammelplätze bzw. Sammelbehälter vorgesehen sein. Damit kann auch eine Trennung verschiedener Stapelhilfen bzw. verschiedener Arten von Stapelhilfen vorgenommen werden.

Die Fig. 4 zeigt beispielsweise ein Substrathandhabungssystem zur automatischen Vorbereitung insbesondere von Banknotenbogen im Produktionsprozess von oben. Von einem Zufuhrsystem 2 kann ein zu verarbeitender Substratstapel 4 einer Roboterzelle 3 zugeführt werden. Der Zwei-Arm-Roboter 3.1 kann mit seinen Greifersystemen 3.2 den vom Zufuhrsystem 2 auf dem Bereitstellungsplatz 2.1 bereitgestellten Substratstapel 4 handhaben. Weiterhin ist ein Lager für Stapelbretter 6 und/oder ein Lager für Distanzbleche 7 im Handhabungsbereich des Zwei-Arm-Roboters 3.1 vorgesehen. Der Zwei-Arm-Roboter 3.1 kann im Handhabungsbereich aufgenommene Teilstapel beispielsweise ausrichten und/oder drehen bzw. wenden. Beispielsweise können gegriffene Teilstapel vorzugsweise um 180° gedreht werden.

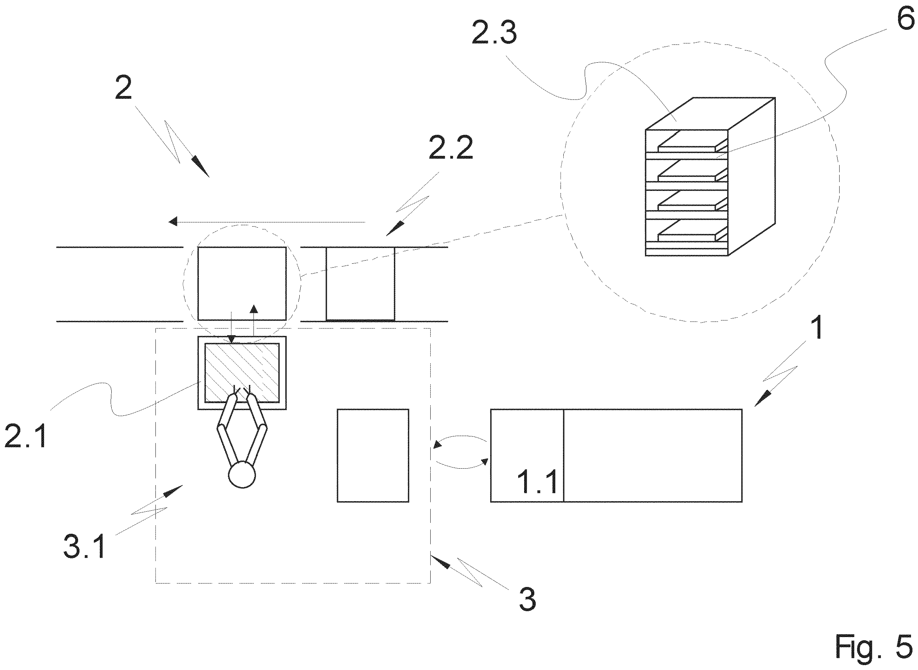

Die Fig. 5 zeigt eine Draufsicht eines Zufuhrsystems 2 mit Logistiksystem 2.2 insbesondere zum Transport von Substratstapel 4 enthaltenden Containern 2.3. Das Logistiksystem 2.2 kann beispielsweise Fördersysteme wie Förderbänder enthalten, welche Paletten 5 und/oder einen oder mehrere Container 2.3 verlagern können. Eine Palette 5 bzw. ein Container 2.3 kann dabei vom Logistiksystem 2.2 insbesondere automatisiert zum Bereitstellungsplatz 2.1 gefördert bzw. im Bereitstellungsplatz 2.1 positioniert werden.

Ein solcher Container 2.3 kann dabei zu verarbeitende Substratbogen enthalten. Bevorzugt werden durch den Container 2.3 mittels Stapelhilfen, insbesondere Stapelbrettern 6, getrennte Teilstapel zu Verfügung gestellt. Die Beschickung des Containers 2.3 mit Substratbogen bzw. mit Stapelbrettern 6 und Teilstapeln kann beispielsweise durch das Zufuhrsystem 2 oder vorgeordnet beispielsweise manuell oder automatisiert erfolgen. Ein derartig beschickter Container 2.3 mit Stapelbrettern 6 und Substratbogen kann beispielsweise auf ein Förderband gestellt werden. Mittels des Zufuhrsystems 2 fährt dieser Container 2.3 dann in die Bereitstellungsposition 2.1 zur Roboterzelle 3 zur automatisierten Stapelvorbereitung. Am Bereitstellungsplatz 2.1 kann dann jeweils ein Stapelbrett 6 mit beispielsweise 100 bis 500 Substratbogen insbesondere durch den Zwei-Arm-Roboter 3.1 entnommen werden. Bevorzugt entnimmt der Zwei-Arm-Roboter 3.1 dabei vom Stapelbrett 6 die Substratbogen und handhabt bzw. manipuliert (z. B. lüftet, lockert) diese. Anschließend kann der Zwei-Arm-Roboter 3.1 das Stapelbrett 6 zurück in den Container 2.3 schieben oder auch einem Sammelplatz bzw. einem Sammelbehälter zuführen.

Bevorzugt kann eine leere Palette 5 bzw. ein leerer Container 2.3 durch ein oder das Logistiksystem 2.2 abgefördert bzw. entfernt werden. Dabei kann das Logistiksystem 2.2 derart ausgebildet sein, dass bereits eine neue Palette 5 bzw. ein neuer Container 2.3 zugeführt wird. Der Roboterzelle 3, insbesondere dem Zwei-Arm-Roboter 3.1, können so permanent zu handhabende Substrate auf Paletten 5 und/oder in Containern 2.3 zur Verfügung gestellt werden.

Insbesondere kann eine Palette 5 mit einem Substratstapel 4 beispielsweise von einem Operator auf ein Förderband des Logistiksystems 2.2 gestellt werden, welches die Palette 5 zur vertikalen Verlagerung einem Stellelement, insbesondere einem Hubelement, des Bereitstellungsplatzes 2.1 zuführt. Insbesondere wird die Palette 5 durch das Logistiksystem 2.2 in einen Hubrahmen im Bereich des Bereitstellungsplatzes 2.1 gefördert. Die Positionierung im Bereitstellungsplatz 2.1 kann dabei je nach Bogenformat erfolgen. Insbesondere kann über den Hubrahmen die Palette 5 auf eine Arbeitshöhe für den Zwei-Arm-Roboter 3.1 bzw. die Greifersysteme 3.2 angehoben werden. Der Zwei-Arm-Roboter 3.1 entnimmt insbesondere eine definierte Anzahl von Bogen je nach definiertem Griffmuster beispielsweise diagonal bzw. an der Vorderkante.

Dabei kann ebenfalls vorgesehen sein, die Substratbogen insbesondere bei einem Zählvorgang bzw. bei Entnahme durch Niederhalter gegen Verrutschen zu sichern. Beispielsweise kann dies durch einen im Bereich des Hubrahmens vorgesehenen bewegbaren Niederhalter erfolgen. Dabei kann beispielsweise der jeweils oberste Substratbogen von oben durch ein oder mehrere Niederhalterelemente fixiert werden.

Nach Ergreifen der Substratbogen kann der Zwei-Arm-Roboter 3.1 "Auflocker- und Lüftungsbewegung" durchführen, während er die Substratbogen auf eine Ablageseite transportiert. Die Ablageseite kann bezüglich des Zwei-Arm-Roboters 3.1 beispielsweise in etwa rechtwinklig zum Bereitstellungsplatz 2.1 vorgesehen sein. Beispielsweise werden die Substratbogen dort auf einem Non-Stop-Rechen abgelegt. Bei der Ablage kann dabei beispielsweise mittels vierseitigem Rüttler der neue Substratstapel 4 ausgerichtet werden, wobei wahlweise auch verschiedene Referenzkanten anwählbar sein können. Der Non-Stop-Rechen kann sich insbesondere bei Ablage weiterer Teilstapel abwärts bewegen, so dass die Ablagehöhe für den Zwei-Arm-Roboter 3.1 konstant bleibt. Muss der neue Substratstapel 4 gewendet werden, kann eine Wendeeinrichtung zum Einsatz kommen. Die Wendeeinrichtung kann beispielsweise oberhalb des Non-Stop-Rechens vorgesehen sein. Bei der Wendeeinrichtung können die Bogen beispielsweise mit einer Kante zwischen Stäbe geführt werden, anschließend rotiert eine Wendestange zum Wenden. Diese Bewegung vermeidet vorteilhaft geknickte Bogenkanten und Eselsohren.

Ist der auf dem Bereitstellungsplatz 2.1 positionierte Substratstapel 4 abgearbeitet, fährt der die gehandhabten Substratbogen tragende Non-Stop-Rechen bevorzugt auf eine am Boden befindliche neue Non-Stop-Systempalette 5. Bevorzugt wird der Non-Stop-Rechen vertikal abgesenkt, bis dessen Tragstäbe in die Aussparungen der Non-Stop-Systempalette 5 eintauchen, so dass die Substratbogen an die Non-Stop-Systempalette 5 übergeben werden. Nach Entfernung eines für den Non-Stop-Rechen vorgesehenen vorderen Tragbalkens kann die die von der Verarbeitungsmaschine 1 zu verarbeitenden Substratbogen tragende Non-Stop-Systempalette 5 bevorzugt automatisiert entnommen werden. Insbesondere wird auch die leere Palette 5 bzw. der leere Container 2.3 auf der Eingangsseite der Roboterzelle 3, insbesondere auf dem Bereitstellungsplatz 2.1, entfernt. Beispielsweise können leere Paletten 5 unter den Zwei-Arm-Roboter 3.1 insbesondere in ein Magazin, befördert werden. Dies kann ebenfalls durch das Logistiksystem 2.2 erfolgen.

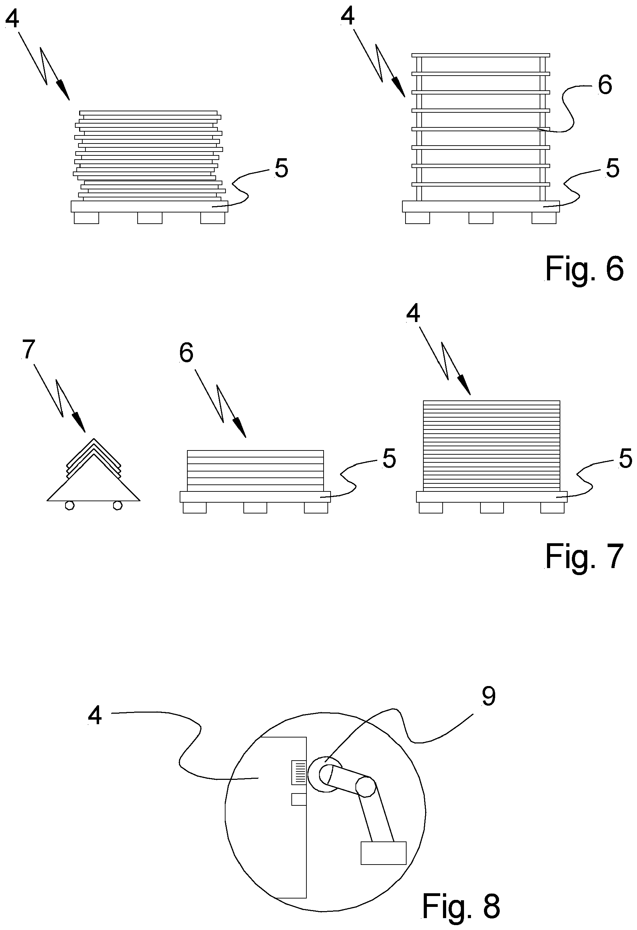

Die Fig. 6 zeigt beispielsweise im Substrathandhabungssystem vom Zufuhrsystem 2 zugeführte Substratstapel 4. Links ist dabei ein nicht vorbereiteter Substratstapel 4 dargestellt, wie dieser durch das Zufuhrsystem 2 zur Roboterzelle 3 gefördert werden kann. Beispielsweise kann der Substratstapel 4 schiefe bzw. wellige Kanten aufweisen und/oder überstehende Einzel- oder Mehrfachbogen enthalten. Rechts ist ein Substratstapel 4 mit Stapelhilfen dargestellt. Beispielsweise kann der Substratstapel 4 durch Stapelbretter 6 bzw. Distanzbleche 7 getrennte Teilstapel enthalten.

Die Fig. 7 zeigt beispielsweise einen vom Substrathandhabungssystem bearbeiteten Substratstapel 4 und gesammelte Stapelhilfen. Der bearbeitete Substratstapel 4 kann auf einer Palette 5 bzw. Non-Stop-Systempalette 5 von der Roboterzelle 3 bzw. durch die Verarbeitungsmaschine 1 bereitgestellt werden. Der Substratstapel 4 kann dabei bevorzugt als ausgerichteter Bogenstapel ohne zwischengefügte Stapelhilfen bereitgestellt werden. Bei ursprünglich vorhandenen Stapelhilfen können diese von einem Sammelbehälter bzw. einem Sammelplatz insbesondere zur Wiederverwendung bereitgehalten werden. Beispielsweise können Stapelbretter 6 ebenfalls auf einer Palette 5 gesammelt werden. Distanzbleche 7 können beispielsweise in einem Lager bereitgestellt werden. Mittels eines Logistik- bzw. Transportsystems können die fertigen Substratstapel 4 und/oder die gesammelten Stapelhilfen, insbesondere auf einer Palette 5 gestapelte Stapelbretter 6 und/oder in einem Behälter gesammelte Distanzbleche 7, automatisiert verlagert bzw. transportiert werden.

Eine Anlieferung eines neuen Substratstapels 4 im Substrathandhabungssystem erfolgt durch das Zufuhrsystem 2 insbesondere auf dem definierten Bereitstellungsplatz 2.1. Dabei kann der Substratstapel 4 von einer Verarbeitungsmaschine, beispielsweise wie oben beschrieben, erzeugt bzw. gebildet worden sein. Bevorzugt werden bei der Handhabung der Substratstapel 4 durch die Roboterzelle 3 Teilstapel aus den zugeführten Substratstapeln 4 gegriffen und die Substrate des jeweiligen Teilstapels gehandhabt, insbesondere getrennt bzw. untereinander getrennt, gelockert und/oder gelüftet. Dabei kann ein zugeführter Substratstapel 4 im Substrathandhabungssystem auch sensorisch erfasst und entsprechend den Sensorwerten insbesondere differenziert gehandhabt werden. Die Roboterarme bzw. Greifersysteme 3.2 der Roboterzelle 3, insbesondere des Zwei-Arm-Roboters 3.1, werden dabei bevorzugt in Abhängigkeit der ermittelten zugeführten Substratstapel 4 nach vorgegebenen Handlungsanweisungen gesteuert oder geregelt.

Auf dem definierten Bereitstellungsplatz 2.1 platzierte Substratstapel 4 werden bevorzugt ggf. nach einem Freigabe- oder Startsignal durch bevorzugt optische Messsysteme einer Stapel-Eingangskontrolle unterzogen. Beispielsweise kann die Prüfung der Geometrie des Substratstapels 4 (z.B. Format, Größe Ladungsträger, Höhe, Welligkeit) und/oder die Prüfung der Stapelqualität (z. B. auf herausstehende Bogen) durchgeführt werden. Die Geometrie des Substratstapels 4 kann mittels eines optischen Messsystems, beispielsweise mittels einer Kamera, insbesondere 3D-Kamera, und/oder eines Laserscanners, erfasst und mit einem Ideal verglichen werden. Sind dabei die Abweichungen größer als definiert, kann der betreffende Substratstapel 4 vom System zurückgewiesen werden bzw. nicht zur Verarbeitung freigegeben werden. Es ist außerdem möglich, dass das System den Substratstapel 4 bis zu der vom Ideal abweichenden Stelle bzw. Position verarbeitet und dann den Bediener informiert, damit dieser das vorhandene Problem löst (z. B. bei einem herausragenden einzelnen Bogen). Anschließend kann dann der Substratstapel 4 weiter vom System verarbeitet werden. Bevorzugt kann dabei oder in diesem Zusammenhang eine Bogenerkennung bevorzugt mit Übermittlung ermittelter Daten an die Roboterzelle 3 und/oder die Verarbeitungsmaschine 1, insbesondere eine Druckmaschine, erfolgen. Besonders bevorzugt kann eine Erkennung des oberen Substratbogens ggf. mit einer Ermittlung einer zugehörigen Losnummer erfolgen. Daraus kann insbesondere das Wissen über alle im aktuellen Los vorhandener Bogen bzw. Substrate resultieren. Bevorzugt erfolgt eine Übermittlung dieser Informationen an die Verarbeitungsmaschine 1, beispielsweise Druckmaschine, insbesondere wenn diese Inline angebunden ist. Alternativ oder zusätzlich kann eine Speicherung beispielsweise zu Dokumentationszwecken insbesondere im System erfolgen.

Weiter kann ein Zählen von Bogen bzw. Substraten durchgeführt werden. Insbesondere kann die Bogenzählung mechanisch erfolgen. Dabei können die Substratbogen mittels eines mechanischen Fühlers, welcher an einer Linearachse oder einem Roboterarm bzw. einem Greifersystem 3.2 oder einem separaten Arm befestigt ist, auf einen zuvor eingestellten Wert abgezählt werden. Zum Beispiel in der Endverarbeitung kann eine exakte Anzahl an Substratbogen notwendig sein. Dies erfolgt insbesondere mit mechanischen Vakuum-Zählscheiben 9 und kann nicht über indirekte Messung (z.B. Stapelhöhe, optische Merkmale) erfolgen. Weiter kann diese Zählung zwecks lückenloser Nachverfolgbarkeit der Substrate bzw. Bedruckstoffe eingesetzt werden.

Die Fig. 8 zeigt beispielsweise eine Vakuum-Zählscheibe 9, welche im Substrathandhabungssystem, insbesondere in der Roboterzelle 3, zur bogengenauen Zählung der Substratbogen eingesetzt werden kann. In diesem Zusammenhang bzw. gleichzeitig kann über ein Messsystem ein dem Substratstapel 4 zugeordnetes Merkmal wie eine Losnummer erkannt werden.

Ein Separieren der Substratbogen mittels der Greifersysteme 3.2 vom Substratstapel 4 kann derart erfolgen, dass eine Anzahl genau gezählter Substratbogen vom Substratstapel 4 separiert und anschließend gegriffen wird. Für einen Zählvorgang kann dabei beispielsweise eine Lücke im Substratstapel 4 gebildet werden, wobei insbesondere eine beispielsweise keilförmig ausgeführte Platte einen Teilstapel vom Hauptstapel trennen kann. Dabei kann der zu zählende Teilstapel während des Zählvorgangs auch über die komplette Bogenbreite auf der Platte aufliegen. Anschließend kann über ein Messsystem, insbesondere die Vakuum-Zählscheibe 9, die definierte Anzahl an Substratbogen abgezählt und dabei bevorzugt abgetrennt bzw. zum Greifen separiert werden. Wenn nicht gezählt wurde, kann eine ungefähre Menge an Substratbogen entnommen bzw. gegriffen werden. Diese Menge kann aber auch z. B. durch eine optische Höhenmessung ermittelt werden.

Je nach zugeführtem Substrat kann in der Roboterzelle 3, insbesondere vom Zwei-Arm-Roboter 3.1, eine zuvor insbesondere vom Bediener festgelegte Bewegung mit den Substratbogen ausgeführt werden. Diese Bewegung kann insbesondere zum Aufbrechen bzw. Entblocken der Substratbogen genutzt werden. Beispielsweise können derartige Informationen aus den detektierten Merkmalen wie der Losnummer ermittelt werden.

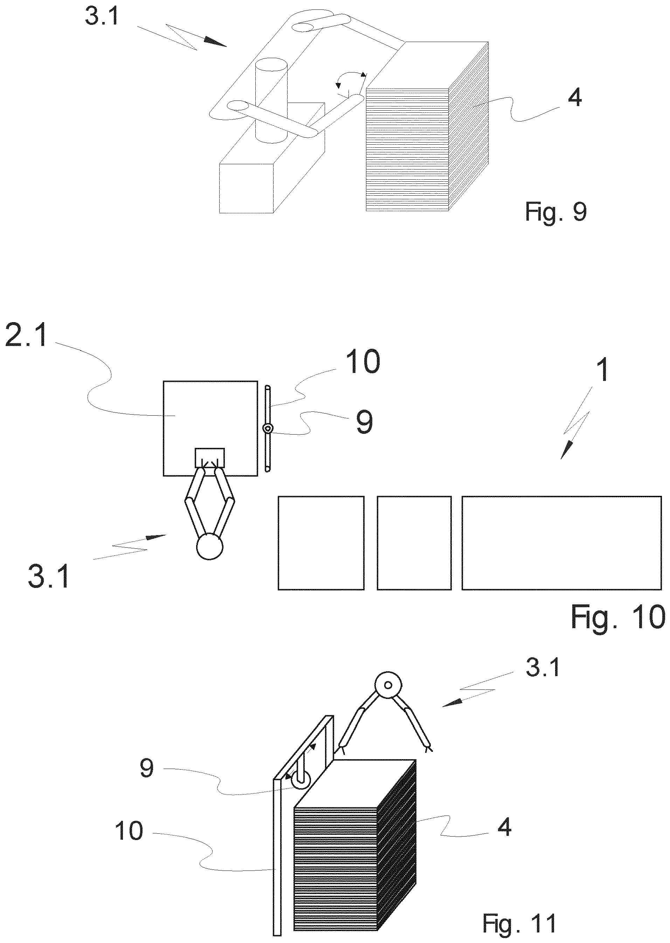

Die Fig. 9 zeigt beispielsweise einen Zwei-Arm-Roboter 3.1 mit Wechselgreifer. Dabei ist eine Vakuum-Zählscheibe 9 als Wechselgreifer direkt am Roboter bzw. an einem Roboterarm angeordnet. Entsprechend kann dabei die Vakuum-Zählscheibe 9 aktiviert bzw. in Stellung gebrachten werden, so dass der Zwei-Arm-Roboter 3.1 mit der Vakuum-Zählscheibe 9 in den Substratstapel 4 fahren kann. Die Vakuum-Zählscheibe 9 bzw. der Roboterarm hält dabei nach einer definierten Anzahl an Substratbogen an. Anschließend kann beispielsweise der Substratstapel 4 nach unten fahren bzw. bewegt sich der Roboterarm mit der Vakuum-Zählscheibe 9 nach oben, derart, dass durch die Relativbewegung eine Lücke entsteht. Anschließend kann ein Greifersystem 3.2, beispielsweise das gegenüberliegende Greifersystem 3.2 des Zwei-Arm-Roboters 3.1, in den Substratstapel 4 greifen und den abgezählten Teilstapel handhaben. Es kann der den Wechselgreifer aufweisende Arm des Zwei-Arm-Roboters 3.1 in dieser Zeit beispielsweise mit einem Greifer-Revolver am Arm oder extern das Werkzeug wechseln und bei der Separierung weiter fortfahren.

Die Fig. 10 zeigt eine Draufsicht auf eine Roboterzelle 3 mit an einem Rahmen 10 angeordneter Vakuum-Zählscheibe 9. Der Rahmen 10 kann beispielsweise benachbart des Bereitstellungsplatzes 2.1 vorgesehen sein und starr oder auch beweglich ausgeführt werden. Der Rahmen 10 kann beispielsweise eine oder mehrere Linearachsen zur beweglichen Aufnahme einer Vakuum-Zählscheibe 9 enthalten.

Die Fig. 11 zeigt eine am Rahmen 10 angeordnete Vakuum-Zählscheibe 9 zum Zählen der Substratbogen des Substratstapels 4. Die Vakuum-Zählscheibe 9 ist hierbei extern an dem Rahmen 10 bzw. Halter angebracht. Die bewegbare Vakuum-Zählscheibe 9 fährt in den Substratstapel 4 bis eine definierte Anzahl an Substratbogen erreicht ist. Der zwischen zwei unmittelbar benachbarte Substratbogen eingeschobene mechanische Fühler fährt anschließend ein Stück hoch und/oder es wird der Substratstapel 4 ein Stück abwärts bewegt, derart, dass durch die Relativbewegung eine Lücke entsteht. Anschließend kann ein oder können beide Greifersysteme 3.2 in den Substratstapel 4 greifen und den abgezählten Teilstapel greifen und handhaben.

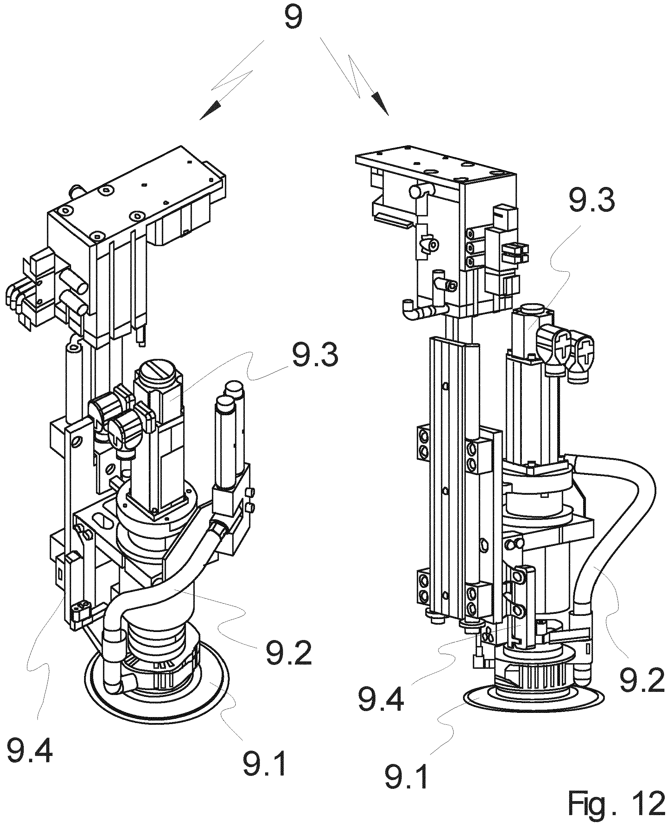

Die Fig. 12 zeigt perspektivische Ansichten einer Vakuum-Zählscheibe 9 zum bogengenauen Abzählen der zu handhabenden Substrate. Mittels eines zwischen die Substrate einfahrenden mechanischen Fühlers, insbesondere einer Zählscheibe 9.1, werden die Substrate bogengenau gezählt und im Falle einer ausreichenden bzw. vorgesehenen Anzahl zur Bildung einer Lücke getrennt. Die Vakuum-Zählscheibe 9 kann dabei an einem Arm des Zwei-Arm-Roboters 3.1 oder am separaten Rahmen 10 oder auch einem separaten Arm vorgesehen sein.

Eine Vakuum-Zählscheibe 9 kann beispielsweise einen Motor 9.3 aufweisen, welcher die Zählscheibe 9.1 rotatorisch antreibt. Mittels eines Vakuumschlauches 9.2 kann dabei der Zahlscheibe 9.1 ein Unterdruck zugeführt werden, welcher an der Unterseite der Zählscheibe 9.1 zum Ansaugen und Anheben des obersten Substratbogens genutzt wird. Die rotierend angetriebene Zählscheibe 9.1 weist an ihrem Umfangsrand wenigstens eine nicht weiter dargestellte spezielle Aussparung auf, um während ihrer Rotation jeden Substratbogen einzeln zu erfassen. Dabei wird insbesondere über eine Messeinrichtung 9.4 die Zählscheibenposition bestimmt. Da die Zählscheibe 9.1 während des Zählvorganges jeden Substratbogen einzeln untergreift kann bei einer definierten Anzahl von Substratbogen eine Lücke zum Handhaben des abgezählten Teilstapels durch den Zwei-Arm-Roboter 3.1 erzeugt werden.

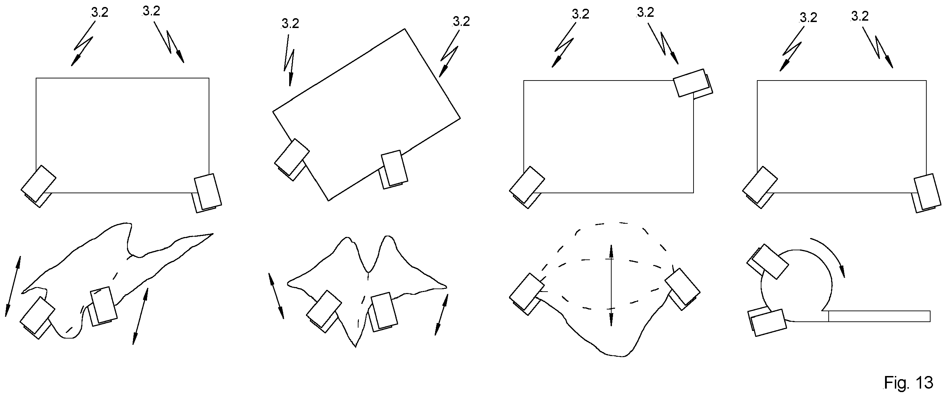

Die Fig. 13 zeigt einige durchführbare Bewegungen des Zwei-Arm-Roboters 3.1 für verschiedene Anwendungsfälle und Substrate. Die Auswahl der durchzuführenden Bewegungen kann beispielsweise vorgegeben sein bzw. aus Messwerten geschlossen werden. Außerdem können die Substratbogen vor dem Ablegen vertikal durch eine Konstruktion von zwei parallelen Rohren hindurchbewegt werden, die die definierte Anzahl an Substratbogen bevorzugt kontinuierlich während der Aufwärtsbewegung von vorn und hinten insbesondere abwechselnd biegt. Die dadurch entstehende Relativbewegung zwischen den einzelnen Substratbogen kann damit einen weiteren Separierungsschritt darstellen.

Weiterhin kann auch ein Lüften der Substratbogen durchgeführt werden, beispielsweise während die Substratbogen durch die Greifersysteme 3.2 des Zwei-Arm-Roboters 3.1 entblockt werden. Dabei kann insbesondere Luft zwischen die Substratbogen geblasen werden, während die Substratbogen mittels der Greifersysteme 3.2 des Zwei-Arm-Roboters 3.1 durch die definierte Bewegung entblockt werden. Dadurch, dass die Substratbogen nur an zwei definierten Stellen durch die Greifersysteme 3.2 gehalten werden, "schwimmt" die Lage der Substratbogen auf.

Ein Ablegen, Sammeln und Ausrichten der Substratbogen kann durch die Ablage der gegriffenen Teilstapel auf dem Ablagetisch bzw. Rütteltisch 8 erfolgen. Es ist jedoch ebenfalls denkbar, dass eine Rütteleinrichtung auf dem Ablagetisch integriert ist. Dies stellt sicher, dass die Substratbogen registerhaltig auf einer Palette 5 bzw. Non-Stop-Systempalette 5 positioniert werden. Die Substratbogen können dabei auf einer Rütteleinrichtung, insbesondere dem Rütteltisch 8, zu Riesen von beispielsweise 1.000 - 10.000 Bogen gesammelt und ausgerichtet werden. Anschließend kann der Transfer der gesammelten Substratogen auf eine Palette 5 bzw. Non-Stop-Systempalette 5 und eine Zuführung der Palette 5 bzw. Non-Stop-Systempalette 5 in den Anleger 1.1 bzw. Non-Stop-Anleger 1.1 der Verarbeitungsmaschine 1 erfolgen. Dies kann ohne weitere Manipulation vom Bediener zum direkten Stapelwechsel im Anleger 1.1 bzw. Non-Stop-Anleger 1.1 der Verarbeitungsmaschine 1, insbesondere Druckmaschine oder Endverarbeitungsmaschine beispielsweise zum Schneiden und/oder Inspizieren, durchgeführt werden.

Aufstellung der verwendeten Bezugszeichen
- 1: Verarbeitungsmaschine
- 1.1: Anleger, Non-Stop-Anleger
- 1.2: Druckwerk
- 1.3: Auslage
- 2: Zufuhrsystem
- 2.1: Bereitstellungsplatz
- 2.2: Logistiksystem
- 2.3: Container
- 3: Roboterzelle
- 3.1: Zwei-Arm-Roboter
- 3.2: Greifersysteme
- 4: Substratstapel
- 5: Palette, Non-Stop-Systempalette
- 6: Stapelbretter
- 7: Distanzbleche
- 8: Rütteltisch
- 8.1: schwenkbarer Anschlag
- 9: Vakuum-Zählscheibe
- 9.1: Zählscheibe
- 9.2: Vakuumschlauch
- 9.3: Motor
- 9.4: Messeinrichtung
- 10: Rahmen

## Patentansprüche

1. Substrathandhabungssystem mit einem Zufuhrsystem (2) zur Zufuhr gestapelter Substrate und mit einer Verarbeitungsmaschine (1) zum Verarbeiten gestapelter Substrate, insbesondere einer Druckmaschine (1) zum Bedrucken gestapelter Substrate,
wobei zwischen dem Zufuhrsystem (2) und der Verarbeitungsmaschine (1) eine Roboterzelle (3) vorgesehen ist und
wobei die Roboterzelle (3) ein oder zwei Greifersysteme (3.2) zur Handhabung jeweils einer Mehrzahl von Substraten aufweist,
wobei die Roboterzelle (3) einen Zwei-Arm-Roboter (3.1) enthält,
**dadurch gekennzeichnet,**
**dass** die Roboterzelle (3) derart ausgebildet ist, dass durch das Zufuhrsystem (2) zuführbare wahlweise verschiedenartig gestapelte Substrate handhabbar sind, wobei das Zufuhrsystem (2) Substratstapel (4) aus in Containern (2.3) befindlichen und/oder aus durch Stapelhilfen (6, 7) getrennten Substraten zuführt und
wobei der Zwei-Arm-Roboter (3.1) einen Teilstapel des Substratstapels (4) ergreift.

2. Substrathandhabungssystem nach Anspruch 1, wobei das Zufuhrsystem (2) Substratstapel (4) aus ungetrennt gestapelten Substraten zuführt und/oder einen Substratstapel (4) auf einem definierten Platz (2.1) bezüglich der Roboterzelle (3, 3.1) bereitstellt.

3. Substrathandhabungssystem nach Anspruch 1 oder 2, wobei ein Ablagetisch (8) vorgesehen ist, auf welchen die gegriffenen Teilstapel durch die ein oder zwei Greifersysteme (3.2) ablegbar sind und wobei zwischen dem Ablagetisch (8) und der Verarbeitungsmaschine (1) ein Substratstapel (4) aus Teilstapeln bildbar ist.

4. Substrathandhabungssystem nach Anspruch 1, 2 oder 3, wobei die von der Roboterzelle (3, 3.1) gehandhabten Teilstapel auf einem vertikal bewegbaren Non-Stop-Rechen ablegbar sind und die Substrate mittels des Non-Stop-Rechens einer Non-Stop-Systempalette (5) zuführbar sind und/oder wobei die Verarbeitungsmaschine (1) einen Non-Stop-Anleger (1.1) aufweist und der Verarbeitungsmaschine (1) aus aufgestapelten Teilstapeln bestehende Substratstapel (4) unterbrechungsfrei zuführbar sind.

5. Substrathandhabungssystem nach Anspruch 1, 2, 3 oder 4, wobei die ein oder zwei Greifersysteme (3.2) Stapelhilfen (6, 7) aus zugeführten Substratstapeln (4) und/oder Containern (2.3) entfernen und/oder wobei die Roboterzelle (3) mindestens einen Sammelplatz und/oder Sammelbehälter für Stapelhilfen (6, 7) aufweist und das oder die Greifersysteme (3.2) zur Zuführung von Stapelhilfen (6, 7) zum Sammelplatz und/oder Sammelbehälter ausgebildet sind.

6. Substrathandhabungssystem nach Anspruch 1, 2, 3, 4 oder 5, wobei der Roboterzelle (3) mindestens ein Messsystem (9) zur Ermittlung der Anzahl von zugeführten Substratbogen zugeordnet ist, wobei insbesondere das Messsystem (9) als die Substratbogen kontaktierendes Messsystem (9) und/oder als Vakuum-Zählscheibe (9) ausgeführt ist und/oder das Messsystem (9) anhebbar und/oder der Substratstapel (4) absenkbar ist, während sich ein Fühler (9.1) des Messsystems (9) zwischen bereichsweise unmittelbar aufeinander liegenden Substratbogen befindet.

7. Substrathandhabungssystem nach Anspruch 1, 2, 3, 4, 5 oder 6, wobei ein oder das Messsystem (9) einem Roboterarm eines Roboters (3.1) insbesondere als Wechselgreifer oder einem separaten Arm oder Rahmen (10) im Bereich eines Bereitstellungsplatzes (2.1) des Zufuhrsystems (2) zugeordnet ist.

8. Substrathandhabungssystem nach Anspruch 1, 2, 3, 4, 5, 6 oder 7, wobei das Zufuhrsystem (2) auf Paletten (5) befindliche Substratstapel (4) aus ungetrennt gestapelten Substraten und/oder aus durch Stapelhilfen (6, 7) getrennten Substraten oder in Containern (2.3) befindliche Substrate mittels eines Logistiksystems (2.2) einem Hubelement eines oder des Bereitstellungsplatzes (2.1) zuführt und/oder wobei das Zufuhrsystem (2) ein Logistiksystem (2.2) aufweist, mittels welchem leere Paletten (5) im Bereich der Roboterzelle (3, 3.1) und/oder in einem Magazin speicherbar sind.

9. Substrathandhabungssystem nach Anspruch 1, 2, 3, 4, 5, 6, 7 oder 8, wobei einem oder dem Bereitstellungsplatz (2.1) ein Hubrahmen zur vertikalen Verlagerung zugeführter Paletten (5) und/oder mindestens ein Niederhalter zum zumindest temporären Niederhalten von Substraten zugeordnet ist.

10. Verfahren zum Betreiben eines Substrathandhabungssystems mit einem Zufuhrsystem (2) zur Zufuhr gestapelter Substrate und einer Verarbeitungsmaschine (1) zum Verarbeiten gestapelter Substrate, insbesondere einer Druckmaschine (1) zum Bedrucken gestapelter Substrate,
wobei zwischen dem Zufuhrsystem (2) und der Verarbeitungsmaschine (1) eine Roboterzelle (3) vorgesehen ist und
wobei die Roboterzelle (3) ein oder zwei Greifersysteme (3.2) zur Handhabung jeweils einer Mehrzahl von Substraten aufweist,
**dadurch gekennzeichnet,**
**dass** durch das Zufuhrsystem (2) Substratstapel (4) aus wahlweise verschiedenartig gestapelten Substraten zugeführt werden,
wobei durch das Zufuhrsystem (2) Substratstapel (4) aus durch Stapelhilfen (6, 7) getrennten Substraten und/oder in Containern (2.3) befindliche Substrate zugeführt werden und
wobei durch das eine oder die zwei Greifersysteme (3.2) abgezählte Teilstapel aus den zugeführten Substratstapeln (4) gegriffen werden.

11. Verfahren nach Anspruch 10, wobei durch das Zufuhrsystem (2) Substratstapel (4) aus ungetrennt gestapelten Substraten zugeführt werden und/oder ein Substratstapel (4) und/oder ein Container (2.3) auf einem definierten Platz (2.1) bezüglich der Roboterzelle (3, 3.1) bereitgestellt wird und/oder wobei durch das eine oder die zwei Greifersysteme (3.2) die Substrate des jeweiligen Teilstapels voneinander und/oder untereinander getrennt werden.

12. Verfahren nach Anspruch 10 oder 11, wobei die zugeführten Substratstapel (4) sensorisch erfasst werden und von dem oder den Greifersystemen (3.2) gegriffene Teilstapel entsprechend den Sensorwerten gehandhabt werden, wobei insbesondere Roboterarme und/oder das oder die Greifersysteme (3.2) der Roboterzelle (3, 3.1) in Abhängigkeit der ermittelten zugeführten Substratstapel (4) nach vorgegebenen Handlungsanweisungen gesteuert oder geregelt werden.

13. Verfahren nach Anspruch 10, 11 oder 12, wobei durch einen Zwei-Arm-Roboter (3.1) Stapelhilfen (6, 7) im Verarbeitungsprozess automatisiert entfernt werden, wobei insbesondere Stapelhilfen (6, 7) durch ein oder zwei Greifersysteme (3.2) einem Sammelplatz, einem Sammelbehälter und/oder einem Container (2.3) zugeführt werden und/oder wobei insbesondere durch ein oder zwei Greifersysteme (3.2) der Roboterzelle (3, 3.1) Stapelbretter (6) und/oder Distanzbleche (7) zur Handhabung gegriffen werden.

14. Verfahren nach Anspruch 10, 11, 12 oder 13, wobei durch ein Messsystem (9) eine Lücke zum Ergreifen eines Teilstapels des Substratstapels (4) geschaffen wird, sobald eine vorgegebene Anzahl von Substratbogen detektiert wurde, wobei insbesondere das Messsystem (9) angehoben und/oder der Substratstapel (4) absenkt wird, während sich mindestens ein Fühler (9.1) des Messsystems (9) zwischen bereichsweise unmittelbar aufeinander liegenden Substratbogen des Substratstapels (4) befindet.

15. Verfahren nach Anspruch 10, 11, 12, 13 oder 14, wobei durch das oder die Greifersysteme (3.2) gehandhabte Teilstapel auf einen Non-Stop-Rechen überführt werden und dieser Non-Stop-Rechen diese Substrate durch Absenken einer Non-Stop-Systempalette (5) übergibt und/oder wobei mittels der Roboterzelle (3, 3.1) gehandhabte auf einer Non-Stop-Systempalette (5) befindliche Substratstapel (4) automatisiert einem Non-Stop-Anleger (1.1) der Verarbeitungsmaschine (1) zugeführt werden.

## Claims

1. A substrate handling system, comprising an infeed system (2) for feeding stacked substrates and comprising a processing machine (1) for processing stacked substrates, in particular a printing press (1) for printing stacked substrates,
a robot cell (3) being provided between the infeed system (2) and the processing machine (1), and
the robot cell (3) comprising one or two gripper systems (3.2), each for handling a plurality of substrates,
the robot cell (3) comprising a dual-arm robot (3.1),
**characterized in that**
the robot cell (3) is configured in such a way that selectively differently stacked substrates feedable by the infeed system (2) can be handled,
the infeed system (2) feeding substrate piles (4) made of substrates that are present in containers (2.3) and/or separated by stacking aids (6, 7), and
the dual-arm robot (3.1) gripping a partial pile of the substrate pile (4).

2. The substrate handling system according to claim 1, wherein the infeed system (2) feeds substrate piles (4) made of substrates that are stacked without being separated and/or stages a substrate pile (4) in a defined space (2.1) with respect to the robot cell (3, 3.1).

3. The substrate handling system according to claim 1 or 2, wherein a deposition table (8) is provided, onto which the gripped partial piles can be deposited by the one or two gripper systems (3.2), and wherein a substrate pile (4) can be formed of partial piles between the deposition table (8) and the processing machine (1).

4. The substrate handling system according to claim 1, 2 or 3, wherein the partial piles handled by the robot cell (3, 3.1) can be deposited onto a vertically movable non-stop rake, and the substrates can be fed to a non-stop system pallet (5) by means of the non-stop rake and/or wherein the processing machine (1) comprises a non-stop feeder (1.1), and the processing machine (1) can be fed substrate piles (4) composed of stacked partial piles without interruption.

5. The substrate handling system according to claim 1, 2, 3 or 4, wherein the one or two gripper systems (3.2) remove stacking aids (6, 7) from fed substrate piles (4) and/or containers (2.3) and/or wherein the robot cell (3) has at least one collection space and/or collection container for stacking aids (6, 7), and the gripper system or systems (3.2) is or are configured to feed stacking aids (6, 7) to the collection space and/or collection container.

6. The substrate handling system according to claim 1, 2, 3, 4 or 5, wherein at least one measuring system (9) for ascertaining the number of fed substrate sheets is assigned to the robot cell (3), wherein in particular the measuring system (9) is configured as a measuring system (9) making contact with the substrate sheets and/or as a vacuum counting disk (9) and/or the measuring system (9) can be lifted and/or the substrate pile (4) can be lowered, while a feeler (9.1) of the measuring system (9) is located between substrate sheets located, at least in areas, directly on top of one another.

7. The substrate handling system according to claim 1, 2, 3, 4, 5 or 6, wherein a or the measuring system (9) is assigned to a robot arm of a robot (3.1), in particular in the form of an interchangeable gripper or a separate arm or frame (10), in the area of a staging space (2.1) of the infeed system (2).

8. The substrate handling system according to claim 1, 2, 3, 4, 5, 6 or 7, wherein the infeed system (2) feeds substrate piles (4) made of substrates that are stacked without being separated and/or made of substrates separated by stacking aids (6, 7) or substrates present in containers (2.3), which are located on pallets (5), by means of a logistic system (2.2) to a lifting element of a or the staging space (2.1) and/or wherein the infeed system (2) comprises a logistic system (2.2), by way of which empty pallets (5) can be stored in the area of the robot cell (3, 3.1) and/or in a magazine.

9. The substrate handling system according to claim 1, 2, 3, 4, 5, 6, 7 or 8, wherein a or the staging space (2.1) is assigned a lifting frame for vertically displacing fed pallets (5) and/or at least one hold-down device for at least temporarily holding down substrates.

10. A method for operating a substrate handling system, comprising an infeed system (2) for feeding stacked substrates and a processing machine (1) for processing stacked substrates, in particular a printing press (1) for printing stacked substrates,
a robot cell (3) being provided between the infeed system (2) and the processing machine (1), and
the robot cell (3) comprising one or two gripper systems (3.2), each for handling a plurality of substrates,
**characterized in that**
substrate piles (4) made of selectively differently stacked substrates are fed by the infeed system (2)
substrates separated by stacking aids (6, 7) and/or substrates present in containers (2.3) being fed by the infeed system (2), and
counted partial piles being gripped from the fed substrate piles (4) by the or the two gripper systems (3.2).

11. The method according to claim 10, wherein substrate piles (4) made of substrates that are stacked without being separated are fed by the infeed system (2) and/or a substrate pile (4) and/or a container (2.3) are staged in a defined space (2.1) with respect to the robot cell (3, 3.1) and/or wherein the substrates of the particular partial pile are separated from one another and/or among one another by the one or the two gripper systems (3.2).

12. The method according to claim 10 or 11, wherein the fed substrate piles (4) are detected by way of sensors, and partial piles gripped by the gripper system or systems (3.2) are handled corresponding to the sensor values, wherein in particular robot arms and/or the gripper system or systems (3.2) of the robot cell (3, 3.1) are controlled by open-loop or closed-loop control as a function of the ascertained fed substrate piles (4) in accordance with predefined handling instructions.

13. The method according to claim 10, 11 or 12, wherein stacking aids (6, 7) are removed during the processing process by a dual-arm robot (3.1) in an automated manner, wherein in particular stacking aids (6, 7) are fed to a collection space, a collection container and/or a container (2.3) by one or two gripper systems (3.2) and/or wherein in particular pile boards (6) and/or spacer plates (7) are gripped by one or two gripper systems (3.2) of the robot cell (3, 3.1) for handling.

14. The method according to claim 10, 11, 12 or 13, wherein a gap for gripping a partial pile of the substrate pile (4) is created by a measuring system (9) as soon as a predefined number of substrate sheets was detected, wherein in particular the measuring system (9) is lifted and/or the substrate pile (4) is lowered, while at least one feeler (9.1) of the measuring system (9) is located between substrate sheets of the substrate pile (4) which are located, at least in areas, directly on top of one another.

15. The method according to claim 10, 11, 12, 13 or 14, wherein partial piles handled by the gripper system or systems (3.2) are transferred onto a non-stop rake, and this non-stop rake transfers these substrates by lowering a non-stop system pallet (5) and/or wherein substrate piles (4) present on a non-stop system pallet (5), which have been handled by means of the robot cell (3, 3.1), are transferred to a non-stop feeder (1.1) of the processing machine (1) in an automated manner.

## Revendications

1. Système de manipulation de substrat avec un système d'amenée (2) pour l'amenée de substrats empilés et avec une machine de traitement (1) pour traiter des substrats empilés, en particulier une machine à impression (1) pour imprimer des substrats empilés,
dans lequel une cellule robotique (3) est prévue entre le système d'amenée (2) et la machine de traitement (1) et
dans lequel la cellule robotique (3) présente un ou deux systèmes de préhension (3.2) pour la manipulation respective d'une pluralité de substrats,
dans lequel la cellule robotique (3) contient un robot à deux bras (3.1),
**caractérisé en ce que**
la cellule robotique (3) est conçue de sorte que des substrats empilés diversement au choix et pouvant être amenés par le système d'amenée (2) soient manipulables,
dans lequel le système d'amenée (2) amène des piles de substrat (4) depuis des substrats se trouvant dans des conteneurs (2.3) et/ou depuis des substrats séparés par des moyens d'empilage (6, 7) et
dans lequel le robot à deux bras (3.1) saisit une pile partielle de la pile de substrat (4).

2. Système de manipulation de substrat selon la revendication 1, dans lequel le système d'amenée (2) amène des piles de substrat (4) depuis des substrats empilés de façon non séparée et/ou met à disposition une pile de substrat (4) sur un emplacement (2.1) défini par rapport à la cellule robotique (3, 3.1) .

3. Système de manipulation de substrat selon la revendication 1 ou 2, dans lequel est prévue une table de dépose (8) sur laquelle les piles partielles saisies peuvent être déposées par les un ou deux systèmes de préhension (3.2) et dans lequel une pile de substrat (4) peut être constituée à partir de piles partielles entre la table de dépose (8) et la machine de traitement (1).

4. Système de manipulation de substrat selon la revendication 1, 2 ou 3, dans lequel les piles partielles manipulées par la cellule robotique (3, 3.1) peuvent être déposées sur un râteau non-stop pouvant être déplacé à la verticale et les substrats peuvent être amenés au moyen du râteau non-stop d'une palette de système non-stop (5) et/ou dans lequel la machine de traitement (1) présente un applicateur non-stop (1.1) et des piles de substrat (4) composées de piles partielles empilées peuvent être amenées sans interruption à la machine de traitement (1).

5. Système de manipulation de substrat selon la revendication 1, 2, 3 ou 4, dans lequel les un ou deux systèmes de préhension (3.2) éloignent des moyens d'empilage (6, 7) depuis des piles de substrat (4) et/ou des conteneurs (2.3) amenés et/ou dans lequel la cellule robotique (3) présente au moins un emplacement de collecte et/ou un récipient de collecte pour des moyens d'empilage (6, 7) et le ou les systèmes de préhension (3.2) sont conçus pour l'amenée de moyens d'empilage (6, 7) vers l'emplacement de collecte et/ou le récipient de collecte.

6. Système de manipulation de substrat selon la revendication 1, 2, 3, 4 ou 5, dans lequel au moins un système de mesurage (9) est attribué à la cellule robotique (3) pour l'établissement du nombre de feuilles de substrat amenées, dans lequel en particulier le système de mesurage (9) est réalisé en tant que système de mesurage (9) entrant en contact avec les feuilles de substrat et/ou en tant que disque de comptage à vide (9) et/ou le système de mesurage (9) peut être soulevé et/ou la pile de substrat (4) peut être abaissée pendant qu'un capteur (9.1) du système de mesurage (9) se trouve entre des feuilles de substrat se situant par endroits directement les unes sur les autres.

7. Système de manipulation de substrat selon la revendication 1, 2, 3, 4, 5 ou 6, dans lequel un ou le système de mesurage (9) est attribué à un bras robotique d'un robot (3.1) en particulier en tant que préhenseur de changement ou à un bras ou cadre (10) séparé dans la zone d'un emplacement de mise à disposition (2.1) du système d'amenée (2).

8. Système de manipulation de substrat selon la revendication 1, 2, 3, 4, 5, 6 ou 7, dans lequel le système d'amenée (2) amène, à un élément de levage d'un ou de l'emplacement de mise à disposition (2.1) et au moyen d'un système logistique (2.2), des piles de substrat (4) se trouvant sur des palettes (5) depuis des substrats empilés de façon non séparée et/ou depuis des substrats séparés par des moyens d'empilage (6, 7) ou se trouvant dans des conteneurs (2.3) et/ou dans lequel le système d'amenée (2) présente un système logistique (2.2) au moyen duquel des palettes (5) vides peuvent être stockées dans la zone de la cellule robotique (3, 3.1) et/ou dans un magasin.

9. Système de manipulation de substrat selon la revendication 1, 2, 3, 4, 5, 6, 7 ou 8, dans lequel un cadre de levage pour le déplacement à la verticale de palettes (5) amenées et/ou au moins un dispositif de maintien en bas pour le maintien en bas au moins temporaire de substrats est attribué à un ou à l'emplacement de mise à disposition (2.1).

10. Procédé destiné à exploiter un système de manipulation de substrat avec un système d'amenée (2) pour l'amenée de substrats empilés et avec une machine de traitement (1) pour traiter des substrats empilés, en particulier une machine à impression (1) pour imprimer des substrats empilés,
dans lequel une cellule robotique (3) est prévue entre le système d'amenée (2) et la machine de traitement (1) et
dans lequel la cellule robotique (3) présente un ou deux systèmes de préhension (3.2) pour la manipulation respective d'une pluralité de substrats,
**caractérisé en ce que**
des piles de substrat (4) sont amenées par le système d'amenée (2) depuis des substrats empilés diversement au choix,
dans lequel des piles de substrat (4) sont amenées par le système d'amenée (2) depuis des substrats séparés par des moyens d'empilage (6, 7) et/ou se trouvant dans des conteneurs (2.3) et
dans lequel des piles partielles comptées par le un ou les deux systèmes de préhension (3.2) sont saisies depuis les piles de substrat (4) amenées.

11. Procédé selon la revendication 10, dans lequel des piles de substrat (4) sont amenées par le système d'amenée (2) depuis des substrats empilés de façon non séparée et/ou une pile de substrat (4) et/ou un conteneur (2.3) est mis(e) à disposition sur un emplacement (2.1) défini par rapport à la cellule robotique (3, 3.1) et/ou dans lequel les substrats de la pile partielle respective sont séparés les uns des autres et/ou entre eux par le un ou les deux systèmes de préhension (3.2).

12. Procédé selon la revendication 10 ou 11, dans lequel les piles de substrat (4) amenées sont détectées par captage et des piles partielles saisies par le ou les systèmes de préhension (3.2) sont manipulées en fonction des valeurs de captage, dans lequel en particulier des bras robotiques et/ou le ou les systèmes de préhension (3.2) de la cellule robotique (3, 3.1) sont commandés ou régulés d'après des consignes opérationnelles prédéfinies en fonction des piles de substrat (4) amenées établies.

13. Procédé selon la revendication 10, 11 ou 12, dans lequel des moyens d'empilage (6, 7) sont éloignés de façon automatisée dans le processus de traitement par un robot à deux bras (3.1), dans lequel en particulier des moyens d'empilage (6, 7) sont amenés à un emplacement de collecte, un récipient de collecte et/ou un conteneur (2.3) par un ou deux systèmes de préhension (3.2) et/ou dans lequel en particulier des planches d'empilement (6) et/ou des tôles d'espacement (7) sont saisies pour la manipulation par un ou deux systèmes de préhension (3.2) de la cellule robotique (3, 3.1).

14. Procédé selon la revendication 10, 11, 12 ou 13, dans lequel un espace est créé par un système de mesurage (9) pour la saisie d'une pile partielle de la pile de substrat (4) dès lors qu'un nombre prédéfini de feuilles de substrat a été détecté, dans lequel en particulier le système de mesurage (9) est soulevé et/ou la pile de substrat (4) est abaissée pendant qu'au moins un capteur (9.1) du système de mesurage (9) se trouve entre des feuilles de substrat de la pile de substrat (4) se situant par endroits directement les unes sur les autres.

15. Procédé selon la revendication 10, 11, 12, 13 ou 14, dans lequel des piles partielles manipulées par le ou les systèmes de préhension (3.2) sont transférées sur un râteau non-stop et ce râteau non-stop transmet ces substrats en abaissant une palette de système non-stop (5) et/ou dans lequel des piles de substrat (4) se trouvant sur une palette de système non-stop (5) et manipulées au moyen de la cellule robotique (3, 3.1) sont amenées de façon automatisée à un applicateur non-stop (1.1) de la machine de traitement (1).
